(19) Europäisches Patentamt
European Patent Office
Office européen des brevets

(11) **EP 4 773 705 A1**

(12) **EUROPEAN PATENT APPLICATION**
published in accordance with Art. 153(4) EPC

(43) Date of publication:
**08.07.2026 Bulletin 2026/28**

(51) International Patent Classification (IPC):
*H04W 72/25* (2023.01)

(21) Application number: **24869844.1**

(22) Date of filing: **13.06.2024**

(86) International application number:
**PCT/CN2024/098828**

(87) International publication number:
**WO 2025/066282 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311289793**

(71) Applicant: **ZTE CORPORATION**
**Shenzhen, Guangdong 518057 (CN)**

(72) Inventors:
• **HE, Haigang**
**Shenzhen, Guangdong 518057 (CN)**
• **LU, Youxiong**
**Shenzhen, Guangdong 518057 (CN)**
• **BI, Feng**
**Shenzhen, Guangdong 518057 (CN)**
• **HU, Yuzhou**
**Shenzhen, Guangdong 518057 (CN)**
• **CHEN, Jie**
**Shenzhen, Guangdong 518057 (CN)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **RESOURCE DETERMINATION METHOD, COMMUNICATION NODE AND STORAGE MEDIUM**

(57) The present application provides a resource determination method, a communication node, and a storage medium. The method comprises: determining a second resource set, any time-frequency resource in the second resource set being a time-frequency resource with continuous logic time slots; and excluding at least one time-frequency resource in the second resource set, the remaining time-frequency resources in the second resource set after resource exclusion being a third resource set.

Determine a second resource set, wherein any time-frequency resource in the second resource set is a time-frequency resource with consecutive logical slots — 110

Exclude at least one time-frequency resource in the second resource set, wherein remaining time-frequency resources in the second resource set after resource exclusion are a third resource set — 120

FIG. 1

**Description**

CROSS-REFERENCE TO RELATED APPLICATIONS

The present application claims priority to the Chinese patent application No. 202311289793.9 filed on September 28, 2023 to the CNIPA, and entitled "RESOURCE DETERMINATION METHOD, COMMUNICATION NODE AND STORAGE MEDIUM", the entire content of which is incorporated herein by reference.

TECHNICAL FIELD

The present application relates to the technical field of wireless communications, e.g., relating to a resource determination method, a communication node and a storage medium.

BACKGROUND

In sidelink communication, for the selection of resources for signaling/data sending by a sending device, one approach is scheduling by a central node (e.g., a base station). The central node determines the sending resources for the device and informs a terminal via signaling. Correspondingly, another resource selection method is a contention-based resource selection method. In the contention-based resource selection method, the device monitors the resource usage within the range of a resource pool, and autonomously selects resources for signaling/data sending in the resource pool based on monitoring results. The contention-based resource selection method may also be referred to as a terminal-autonomous resource selection method.

An existing terminal-autonomous resource selection mechanism in a sidelink is designed for a licensed spectrum. With the existing terminal-autonomous resource selection mechanism, N selected time-frequency resources are discrete in a time domain, and the N selected time-frequency resources are not guaranteed to fall within the same group of a plurality of consecutive channels in a frequency domain. A channel refers to a carrier or a part of a carrier composed of a group of consecutive resource blocks (RBs). For example, one channel includes 20 MHz bandwidth frequency-domain resources in one carrier.

On an unlicensed spectrum, one communication device, before using time-frequency resources, needs to perform a channel access procedure to evaluate channel availability (or whether a channel is idle). When one or more channels are evaluated as available (or depending on contributions), it implies that a communication node may occupy the one or more channels for information transmission, that is, listen before talk (LBT) is successful. Otherwise, the channel is determined to be occupied, and LBT fails. When the above sidelink autonomous resource selection mechanism is applied to the unlicensed spectrum, channel access failures are likely to occur.

SUMMARY

The present application provides a resource determination method, a communication node, and a storage medium.

An embodiment of the present application provides a resource determination method, including: determining a second resource set, wherein any time-frequency resource in the second resource set is a time-frequency resource with consecutive logical slots; and excluding at least one time-frequency resource in the second resource set, wherein remaining time-frequency resources in the second resource set after resource exclusion are a third resource set.

An embodiment of the present application further provides a communication node, including: a memory, a processor, and a computer program stored on the memory and capable of running on the processor, wherein the processor, when executing the program, implements the above resource determination method.

An embodiment of the present application further provides a computer-readable storage medium. The computer-readable storage medium stores a computer program thereon, and the program, when executed by a processor, implements the above resource determination method.

BRIEF DESCRIPTION OF DRAWING(S)

FIG. 1 is a flowchart of a resource determination method provided by an embodiment.
FIG. 2 is a schematic diagram of time-frequency resources in a resource pool provided by an embodiment.
FIG. 3 is another schematic diagram of time-frequency resources in a resource pool provided by an embodiment.
FIG. 4 is a schematic diagram of resource exclusion for time-frequency resources on one resource pool within a time range provided by an embodiment.

FIG. 5 is a schematic structural diagram of a resource determination apparatus provided by an embodiment.

FIG. 6 is a schematic diagram of a hardware structure of a communication node provided by an embodiment.

DETAILED DESCRIPTION

The present application is illustrated below in conjunction with the accompanying drawings and embodiments. It is to be understood that the specific embodiments described herein are only used for explaining the present application, not limiting the present application. It should be noted that the embodiments in the present application and features in the embodiments can be arbitrarily combined with each other in the case of not conflicting. Furthermore, it should be noted that for ease of description, the accompanying drawings only show parts related to the present application, rather than the entire structure.

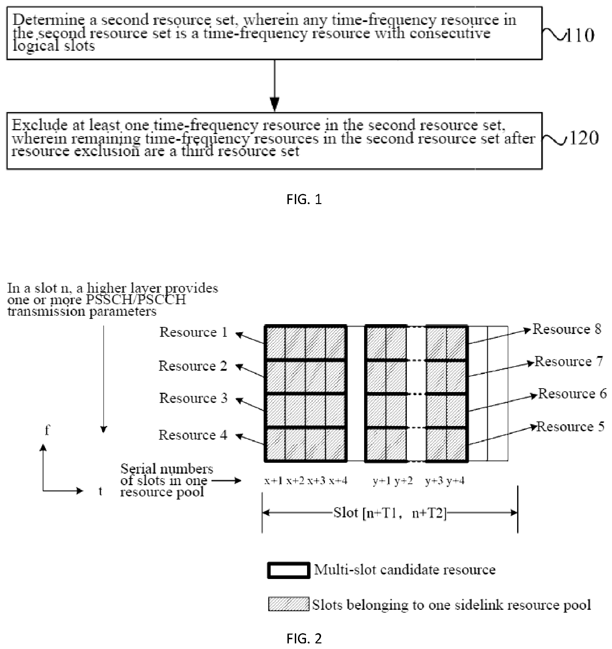

FIG. 1 is a flowchart of a resource determination method provided by an embodiment. The method may be applied to a terminal device, such as user equipment (UE). As shown in FIG. 1, the method provided by this embodiment includes step 110 and step 120.

In step 110, a second resource set is determined, wherein any time-frequency resource in the second resource set is a time-frequency resource with consecutive logical slots.

In step 120, at least one time-frequency resource in the second resource set is excluded, wherein remaining time-frequency resources in the second resource set after resource exclusion are a third resource set.

In this embodiment, by determining the second resource set and by determining the third resource set from the second resource set, the time-frequency resources with the consecutive logical slots are included, so that the opportunity of being consecutive on a time domain is increased. When the time-frequency resources selected by a terminal are consecutive on the time domain, the time-frequency resources fall within the same group of a plurality of consecutive channels on a frequency domain. On this basis, one terminal does not need to perform channel contention via a channel access procedure before transmission in each slot on the selected time-frequency resource containing a plurality of slots. After one terminal successfully contends for a channel through a channel access procedure before transmission on one time-frequency resource, on each slot included in transmission on the one time-frequency resource, the terminal may transmit directly on subsequent slots included in the transmission on the time-frequency resource without contending for the channel. Compared with the transmission on earlier slots of the time-frequency resource, the transmission on each subsequent slot may be either a repeated transmission of the same transmission block or a transmission of a different transmission block, thereby increasing the opportunity for channel access.

In one embodiment, the second resource set is a subset of a first resource set, the first resource set includes one or more time-frequency resources with consecutive logical slots in one resource pool within a set time interval, and any time-frequency resource in the determined second resource set is a time-frequency resource with consecutive logical slots and consecutive physical slots.

In one embodiment, a frequency domain of each time-frequency resource in the second resource set includes at least one of the following:

   one or more consecutive sub-channels in one resource pool; or
   one or more consecutive resource block sets, and one or more consecutive sub-channels included in each resource block set by each time-frequency resource.

In one embodiment, determining the second resource set includes:
excluding time-frequency resources with inconsecutive physical slots in the first resource set, wherein remaining time-frequency resources in the first resource set after resource exclusion are the second resource set.

In one embodiment, determining the second resource set includes:
defining the second resource set as time-frequency resources with consecutive physical slots in the first resource set.

In one embodiment, the method further includes:
providing physical sidelink transmission parameters to a first terminal via a higher layer, wherein the physical sidelink transmission parameters include a number of consecutive slots.

Physical sidelink transmission includes one of the following: physical sidelink control channel (PSCCH) and physical sidelink shared channel (PSSCH) transmission, PSCCH transmission, and PSSCH transmission.

In one embodiment, the number of the consecutive slots includes at least one of the following:

   a number of consecutive physical slots for multi-consecutive-slot transmission;
   a number of consecutive physical slots;
   a number of consecutive logical slots for multi-consecutive-slot transmission; or
   a number of consecutive logical slots.

In one embodiment, the physical sidelink transmission parameters further include at least one of the following:

a remaining packet delay budget;
a number of sub-channels for PSSCH transmission;
a number of resource block sets used in PSCCH and PSSCH transmission;
a number of sub-channels used in each resource block set among the resource block sets used in PSCCH and PSSCH transmission;
a resource reservation interval; or
resource block sets where consecutive LBT fails.

In one embodiment, the physical sidelink transmission parameters further include a remaining packet delay budget.

The remaining packet delay budget meets at least one of the following:

the number of the consecutive slots is less than or equal to the remaining packet delay budget;
a conversion value of the number of the consecutive slots is less than or equal to the remaining packet delay budget;
the number of the consecutive slots is less than or equal to a conversion value of the remaining packet delay budget;
a corresponding value of the number of the consecutive slots is less than or equal to the remaining packet delay budget; or
the number of the consecutive slots is less than or equal to a difference between the remaining packet delay budget and a first set value, wherein the first set value is determined based on a subcarrier spacing configuration of a sidelink bandwidth part.

In one embodiment, the physical sidelink transmission parameters further include a resource reservation interval, the resource reservation interval is converted into a value with a unit of logical slots, and the value with the unit of logical slots is marked as a conversion value.

The conversion value meets at least one of the following:

the number of the consecutive slots is less than or equal to the conversion value;
the number of the consecutive slots is less than or equal to a sum of the conversion value and one compensation value;
the number of the consecutive slots is less than or equal to a product of $2^{\mu}$ and the conversion value; or
the number of the consecutive slots is less than or equal to a sum of the product of $2^{\mu}$ and the conversion value and one compensation value;
wherein $\mu$ is a non-negative integer, and $\mu$ is determined based on a subcarrier spacing configuration of a sidelink bandwidth part.

In one embodiment, the physical sidelink transmission parameters further include a remaining packet delay budget.

Any resource in the first resource set is not earlier than a sum of first time and second time, wherein the second time meets at least one of the following:

the second time is less than or equal to a difference between the remaining packet delay budget and the number of consecutive slots plus one; or
the second time is less than or equal to a difference between the remaining packet delay budget and a second set value plus one, wherein the second set value is obtained by converting the number of the consecutive slots with a unit of logical slots into a value with a unit of physical slots.

In one embodiment, the physical sidelink transmission parameters further include a remaining packet delay budget.

Any resource in the first resource set is not earlier than a sum of first time and second time, and not later than a sum of the first time and third time.

The third time meets at least one of the following:

the number of consecutive slots is less than or equal to a difference between the third time and the second time plus one;
the number of the consecutive slots is less than or equal to a difference between the third time and a third set value plus one, wherein the third set value is determined based on a subcarrier spacing configuration of a sidelink bandwidth part; or

the number of the consecutive slots is less than or equal to the third time.

In one embodiment, the method includes:
selecting at least one target resource from the third resource set or a subset of the third resource set; and sending sidelink information or a physical sidelink channel via all or part of resources in the at least one target resource.

In one embodiment, any time-frequency resource in the determined second resource set is a time-frequency resource with consecutive logical slots and consecutive physical slots.

In this embodiment, by determining that any time-frequency resource in the second resource set has consecutive logical slots, it is guaranteed that any time-frequency resource belongs to one resource pool, and then sidelink communication may be performed. By determining that any time-frequency resource in the second resource set has consecutive physical slots, the time-frequency resources are consecutive on the time domain. When the time-frequency resources fall within the same group of a plurality of consecutive channels on the frequency domain, on this basis, the terminal does not need to perform channel contention via the channel access procedure before transmission in each slot on the selected time-frequency resource containing a plurality of slots. After the terminal successfully contends for a channel through the channel access procedure before transmission on one time-frequency resource, on each slot included in transmission on the one time-frequency resource, the terminal may transmit directly on subsequent slots included in the transmission on the time-frequency resource without contending for the channel. Compared with the transmission on earlier slots of the time-frequency resource, the transmission on each subsequent slot can be either a repeated transmission of the same transmission block or a transmission of a different transmission block, thereby increasing the opportunity for channel access. The resource determination method is illustratively described below through some embodiments.

Embodiment I

In this embodiment, the resource determination method may be applied to a first terminal, including: requesting, by a higher layer of the first terminal, the first terminal to determine a resource subset, wherein, in order to trigger this process, in one slot n, the higher layer provides one or more PSCCH/PSSCH transmission parameters; determining a second resource set, wherein the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set; excluding, by a physical layer of the first terminal, one or more resources in the second resource set, wherein remaining resources are a third resource set; and reporting, by the physical layer of the first terminal, the third resource set to the higher layer. One resource pool may be used for PSSCH transmission, and one resource pool includes a plurality of frequency domain units on a frequency domain and includes a plurality of slots on a time domain.

In one example, the higher layer includes at least one of the following: a medium access control (MAC) layer or a radio resource control (RRC) layer.

In one example, a slot is equivalent to a physical slot. A slot in one resource pool is equivalent to a logical slot.

In one example, at least one time-frequency resource with consecutive slots in one resource pool may also be called at least one time-frequency resource with consecutive logical slots, or at least one time-frequency resource with consecutive logical slots in one resource pool.

In one example, the second resource set including the time-frequency resources with consecutive slots in the first resource set may also be referred to as the second resource set including time-frequency resources with consecutive physical slots in the first resource set.

In one example, two time-frequency resources in the first resource set may overlap on the time domain.

In one example, two time-frequency resources in the second resource set may overlap on the time domain.

In one example, two time-frequency resources in the third resource set may overlap on the time domain.

In one example, the time interval [n+T1, n+T2] includes T2-T1+1 slots, namely slots n+T1, n+T1+1, ..., n+T2. The slots n+T1, n+T1+1, ..., n+T2 may also be referred to as physical slots n+T1, n+T1+1, ..., n+T2. In the T2-T1+1 slots, a plurality of slots belonging to one resource pool are included, that is, a plurality of logical slots are included.

FIG. 2 is a schematic diagram of time-frequency resources in a resource pool provided by an embodiment. As shown in FIG. 2, in the figure, the slot [n+T1, n+T2] includes 12 physical slots, and the 12 physical slots include 8 logical slots, namely including 8 slots belonging to one resource pool.

In one example, the first resource set includes at least one time-frequency resource with consecutive slots included in one resource pool within the time interval [n+T1, n+T2], namely including at least one time-frequency resource with consecutive logical slots. As shown in FIG. 2, in the figure, the first resource set includes 8 time-frequency resources within the time interval [n+T1, n+T2], which may also be referred to as 8 candidate resources or 8 candidate multi-slot resources. Each resource among the 8 time-frequency resources includes N=4 consecutive slots in one resource pool on the time domain, namely including N=4 consecutive logical slots. A time-frequency resource marked as resource 1 includes N=4 consecutive slots in one resource pool on the time domain, which are the {x, x+1, x+2, x+3}-th slots with consecutive serial numbers in one resource pool, namely logical slots {x, x+1, x+2, x+3}, and slot serial numbers (i.e., physical slot serial numbers) corresponding to the logical slots {x, x+1, x+2, x+3} are {n+T1, n+T1+1, n+T1+2, n+T1+3}. A time-frequency resource marked as resource 5 includes N=4 logical slots {y, y+1, y+2, y+3} on the time domain, and slot serial numbers (i.e., physical slot serial numbers) corresponding to the logical slots {y, y+1, y+2, y+3} are {n+T1+5, n+T1+6, n+T1+8, n+T1+9}. In the figure, y+1=x+5.

In FIG. 2, the first resource set includes at least one time-frequency resource with consecutive slots included in one resource pool within the time interval [n+T1, n+T2], namely including resource 1 to resource 8 in the figure. Slots included in any one of resource 1 to resource 8 are consecutive in one resource pool, and the slots included in any resource may be inconsecutive in the range of all slots (i.e., in the range of physical slots).

The second resource set includes all time-frequency resources with consecutive physical slots in the first resource set, and in the figure, the second resource set includes resource 1 to resource 4. Slots included in any one of resource 1 to resource 4 are consecutive not only in one resource pool, but consecutive in the range of all slots (i.e., in the range of physical slots). Resource 5 to resource 8 do not belong to the second resource set, and for each resource in resource 5 to resource 8, logical slots are consecutive in serial number, but physical slots are inconsecutive in serial number.

In one example, the first terminal further determines the first resource set except determining the second resource set. In the particular example shown in FIG. 2, the first terminal determines that the first resource set includes resource 1 to resource 8.

In one example, the physical layer of the first terminal excludes one or more resources in the second resource set, and the remaining resources are the third resource set.

In one example, the higher layer of the first terminal requests the first terminal to determine a resource subset, and the third resource set is the resource subset determined by the first terminal.

In one example, the physical layer of the first terminal reports the third resource set to the higher layer, namely reporting a resource subset.

In one example, the higher layer of the first terminal selects at least one resource from the third resource set for sending sidelink information.

In one example, the higher layer of the first terminal selects at least one resource from the third resource set for sending sidelink information which includes PSCCH/PSSCH transmission.

In one example, PSCCH/PSSCH transmission includes at least one of the following: PSCCH transmission; PSSCH transmission; and PSCCH transmission and PSSCH transmission.

Embodiment II

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set. The first resource set includes at least one time-frequency resource with consecutive slots included in one resource pool within the time interval [n+T1, n+T2], which represents any time-frequency resource in the first resource set. The corresponding slots are consecutive in one resource pool, but are not necessarily consecutive within the range of slots [n+T1, n+T2]. That is to say, these slots are consecutive logical slots, but are not necessarily consecutive physical slots.

The determined second resource set includes time-frequency resources with consecutive slots in the first resource set, which represent any time-frequency resource in the second resource set. The corresponding slots are consecutive within the range of slots [n+T1, n+T2]. That is to say, these slots are consecutive physical slots.

In one example, the first terminal determining the second resource set includes: defining the second resource set as time-frequency resources with consecutive physical slots in the first resource set.

Embodiment III

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set. The first resource set includes at least one time-frequency resource with consecutive slots included in one resource pool within the time interval [n+T1, n+T2], which represents any time-frequency resource in the first resource set. The corresponding slots are consecutive in one resource pool, but are not necessarily consecutive within the range of slots [n+T1, n+T2]. That is to say, these slots are consecutive logical slots, but are not necessarily consecutive physical slots.

The determined second resource set includes time-frequency resources with consecutive slots in the first resource set, which represent any time-frequency resource in the second resource set. The corresponding slots are consecutive within the range of slots [n+T1, n+T2]. That is to say, these slots are consecutive physical slots.

In one example, the first terminal determining the second resource set includes: excluding time-frequency resources with inconsecutive physical slots in the first resource set.

Embodiment IV

In Example 1, one candidate multi-slot resource includes at least one of the following on a frequency domain:

$L_{subCH}$ consecutive sub-channels in one resource pool; or

$L_{RBset}$ consecutive RB sets, and $L_{subCH}$ consecutive sub-channels contained in each RB set by the one candidate multi-slot resource.

In one example, the candidate multi-slot resource may also be referred to as a multi-slot candidate resource.

One candidate multi-slot resource includes N consecutive slots in one resource pool within a time interval [n+T1,n+T2] on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, \ldots\right)$, and $t\left(t'^{SL}_0, t'^{SL}_1, t'^{SL}_2, \ldots\right)$ denotes a slot set belonging to a sidelink resource pool. The k-th slot in the N consecutive slots in one resource pool within the above slot interval [n+T1,n+T2] is marked as $t'^{SL}_{y+k}$, where k=0, 1, ..., N-1.

In one example, the above $L_{subCH}$ is a positive integer.

In one example, the above $L_{RBset}$ is a positive integer.

In one example, different candidate multi-slot resources may overlap on the time domain.

In one example, in the above resource pool within the time interval [n+T1,n+T2], a resource set composed of multi-slot resources satisfying following features is marked as a first resource set:

on the frequency domain, it includes at least one of the following: $L_{subCH}$ consecutive sub-channels in one resource pool; or $L_{RBset}$ consecutive RB sets, and $L_{subCH}$ consecutive sub-channels contained in each RB set by the multi-slot resource.

On the time domain, it includes N consecutive slots in one resource pool within the time interval [n+T1,n+T2].

In one example, a higher layer provides one or more PSSCH/PSCCH transmission parameters including the number N of slots, wherein the number N of the slots represents the number of consecutive slots within the range of one resource pool included by one candidate multi-slot resource.

In one example, a first terminal determines a second resource set, the determined second resource set is a subset of the first resource set, the first resource set includes at least one time-frequency resource with consecutive slots included within the range of one resource pool within the time interval [n+T1, n+T2], and the determined second resource set includes time-frequency resources with consecutive slots in the first resource set.

In one example, the first terminal determining the second resource set includes: defining the second resource set as time-frequency resources with consecutive physical slots in the first resource set.

In one example, the first terminal determining the second resource set includes: excluding time-frequency resources with inconsecutive physical slots in the first resource set.

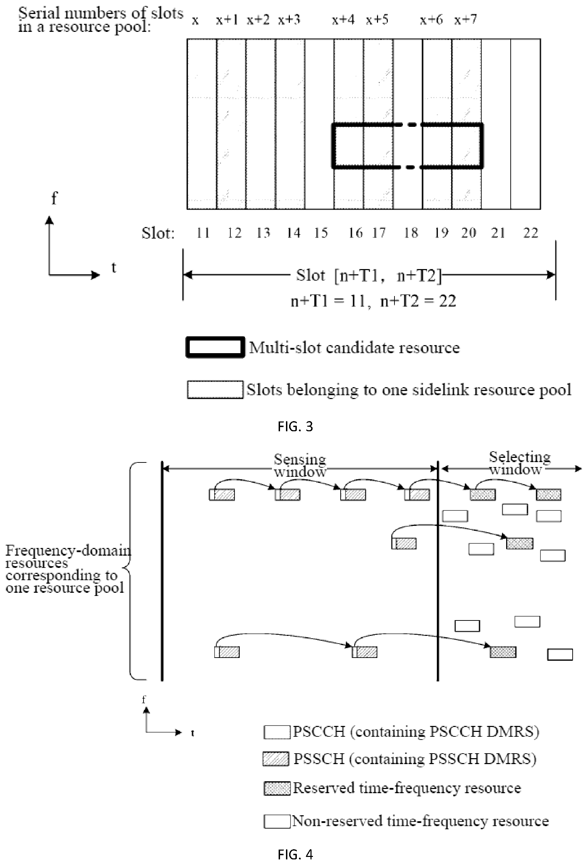

FIG. 3 is another schematic diagram of time-frequency resources in a resource pool provided by an embodiment. As shown in FIG. 3, one candidate multi-slot resource includes N slots, where N=4. The serial number of the k-th slot in the N slots is marked as $t'^{SL}_{y+k}$, where k=0, 1, ..., N-1. For the k-th slot in the N slots, the serial number of the slot in one resource pool is y+k, where y+k is a subscript of $t'^{S}_{y+k}$. For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. In the figure, [n+T1, n+T2] includes 12 physical slots 11-22. The multi-slot resource in the figure includes slots with physical slot serial numbers of $t'^{SL}_{y+k}$={16, 17, 19, 20}.

In one example, the candidate multi-slot resource may also be referred to as a multi-slot candidate resource.

In Example 2, a sensing window is defined as a slot in $\left[n-T_0, n-T^{SL}_{proc,0}\right)$, the unit of $T_0$ is slot, and $T^{SL}_{proc,0}$ is a value depending on an SCS configuration $\mu_{SL}$ of an SL BWP. One piece of UE monitors all or part of slots in slots belonging to one sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T_p^{SL}{}_{roc,0}$ and $\mu_{SL}$ is as shown in Table 1.

In Example 3, a parameter Th $(p_i,p_j)$ is set as the i-th RSRP threshold in sl-Thres-RSRP-List, and $i=p_i+(p_j-1)*8$. sl-Thres-RSRP-List is an RSRP threshold list, this parameter provides an RSRP threshold of each $(p_i,p_j)$, $p_i$ is a value of a priority field in a received SCI format 1-A, and $p_j$ is a transmission priority of a selected resource. The sending priority $p_j$ may also be marked as $\text{prio}_{TX}$.

In Example 4, a set $S_A$ is initialized as the second resource set in above Example 1.

In Example 5, one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'^{SL}_m$ is set as the periodicity value, and indicates all sub-channels on one resource pool; and
for any periodicity value allowed by the higher layer parameter such as sl-ResourceReservePeriodList, a condition c in Example 6 is met.

In this example, if the number of remaining candidate multi-slot resources in the set $S_A$ is less than $X \cdot M_{total}$, then the set $S_A$ is initialized as a resource set corresponding to all candidate multi-slot resources in above Example 4, namely the set $S_A$ in Example 4, which is also the second resource set in Example 4.

In Example 6, for a multi-slot candidate resource x in the set $S_A$, if a target condition is met, the resource is excluded, wherein the target condition at least includes:

a. UE receives an SCI format 1-A in the slot $t'^{SL}_m$ belonging to the resource pool, and indication information of the SCI format 1-A includes: a field "Resource reservation period" (resource reservation period indicator field, which may or may not exist), used to indicate a value of $P_{rsvp\_RX}$; and a field "Priority" (priority indicator field), indicating a value of $\text{prio}_{RX}$;
b. RSRP obtained by measurement is higher than a threshold $Th(\text{prio}_{RX},\text{prio}_{TX})$; and
c. according to the SCI format received in the slot $t'^{SL}_m$, slots and resource block sets overlapping with a target resource set are determined, or, according to the SCI format that assumes to be received in the slot $t'^{SL}_{m+q \times P'_{rsvp\_RX}}$, slots and resource block sets overlapping with the target resource set are determined. The target resource set includes at least one of the following:

the multi-slot candidate resource x; or
a frequency-domain resource the same as the multi-slot candidate resource x, with a slot serial number and a slot serial number of the multi-slot candidate resource x increased by $j \times P'_{rsvp_{TX}}$. The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P_{rsvp\_RX}$ value in ms being converted into the number of logical slots.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then Th $(p_i,p_j)$ corresponding to each priority value $(p_i,p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the set $S_A$ obtained after executing Example 4, Example 5 and/or Example 6.

In one example, $M_{total}$ is the number of multi-slot resources included in the first resource set, or $M_{total}$ is the number of multi-slot resources included in the second resource set.

In one example, X is a percentage value, or X is a ratio value.

In one example, the set $S_A$ obtained after executing Examples 4-6, and/or the set $S_A$ obtained after executing at least one example among Examples 4-6 are/is marked as third resource sets/a third resource set.

Embodiment V

In Example 1, one candidate multi-slot resource includes at least one of the following on a frequency domain:

$L_{subCH}$ consecutive sub-channels in one resource pool; or

$L_{RBset}$ consecutive RB sets, wherein each RB set contains $L_{subCH}$ consecutive sub-channels.

One candidate multi-slot resource includes N consecutive slots in one resource pool within a time interval [n+T1,n+T2] on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, ...\right)$, and $t\left(t'^{SL}_0, t'^{SL}_1, t'^{SL}_2, ...\right)$ denotes a slot set belonging to a sidelink resource pool. The k-th slot in the N consecutive slots in one resource pool within the above slot interval [n+T1,n+T2] is marked as $t'^{SL}_{y+k}$, where k=0, 1, ..., N-1.

In one example, different candidate multi-slot resources may overlap on the time domain.

In one example, in the above resource pool within the time interval [n+T1,n+T2] , a resource set composed of multi-slot resources satisfying following features is marked as a first resource set:

on the frequency domain, including at least one of the following: $L_{subCH}$ consecutive sub-channels in one resource pool; or

$L_{RBset}$ consecutive RB sets, wherein each RB set contains $L_{subCH}$ consecutive sub-channels.

On the time domain, it includes N consecutive slots in one resource pool within the time interval [n+T1,n+T2] .

In one example, a higher layer provides one or more PSSCH/PSCCH transmission parameters including the number N of slots, wherein the number N of the slots represents the number of consecutive slots in one resource pool included by one candidate multi-slot resource.

As shown in FIG. 3, one candidate multi-slot resource includes N slots, where N=4. The serial number of the k-th slot in the N slots is marked as $t'^S_{y+L_k}$, where k=0, 1, ..., N-1. For the k-th slot in the N slots, the serial number of the slot in one resource pool is y+k, where y+k is a subscript of $t'^S_{y+L_k}$. For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. In the figure, [n+T1, n+T2] includes 12 physical slots 11-22. The multi-slot resource in the figure includes slots with physical slot serial numbers of $t'^{SL}_{y+k}$={16, 17, 19, 20}.

In Example 2, a sensing window is defined as a slot in $\left[n-T_0, n-T^{SL}_{proc,0}\right)$, the unit of $T_0$ is slots, and $T_p^{SL}{}_{roc,0}$ is a value depending on an SCS configuration $\mu_{SL}$ of an SL BWP. One piece of UE monitors all or part of slots in slots belonging to a sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T^{SL}_{proc,0}$ and $\mu_{SL}$ is as shown in Table 1.

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set.

In one example, the first terminal determining the second resource set includes: defining the second resource set as time-frequency resources with consecutive physical slots in the first resource set.

In one example, the first terminal determining the second resource set includes: excluding time-frequency resources with inconsecutive physical slots in the first resource set.

In Example 3, a parameter Th $(p_i,p_j)$ is set as the i-th RSRP threshold in sl-Thres-RSRP-List, and i=$p_i$+($p_j$-1)*8. sl-Thres-RSRP-List is an RSRP threshold list, this parameter provides an RSRP threshold of each ($p_i$, $p_j$), $p_i$ is a value of a priority field in a received SCI format 1-A, and $p_j$ is a transmission priority of a selected resource. The sending priority $p_j$ may also be marked as $prio_{TX}$.

In Example 4, a set $S_A$ is initialized as the second resource set in above Example 2.

In Example 5, one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'_m{}^{SL}$ is set as the periodicity value, and indicates all sub-channels on one resource pool; and
for any periodicity value allowed by the higher layer parameter (sl-ResourceReservePeriodList), the condition c in Example 6 is met.

In this example, if the number of remaining candidate multi-slot resources in the set $S_A$ is less than $X \cdot M_{total}$, then the set $S_A$ is initialized as a resource set corresponding to all candidate multi-slot resources in above Example 4, namely the set $S_A$ in Example 4, which is also the second resource set in Example 4.

In Example 6, for a multi-slot candidate resource x in the set $S_A$, if a target condition is met, the resource is excluded, wherein the target condition at least includes:

a. UE receives an SCI format 1-A in the slot $t'_m{}^{SL}$ belonging to the resource pool, and indication information of the SCI format 1-A includes: a field "Resource reservation period" (resource reservation period indicator field, which may or may not exist), used to indicate a value of $P_{rsvp\_RX}$; and a field "Priority" (priority indicator field), indicating a value of $prio_{RX}$;
b. RSRP obtained by measurement is higher than a threshold $Th(prio_{RX}, prio_{TX})$; and

c. according to the SCI format received in the slot $t'_m{}^{SL}$, slots and resource block sets overlapping with a target resource set are determined, or, according to the SCI format that assumes to be received in the slot $t'_{m+q \times P'_{rsvp\_RX}}{}^{SL}$, slots and resource block sets overlapping with the target resource set are determined. The target resource set includes at least one of the following:

the multi-slot candidate resource x; or
a frequency-domain resource the same as the multi-slot candidate resource x, with a slot serial number and a slot serial number of the multi-slot candidate resource x increased by $j \times P'_{rsvp_{TX}}$. The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P_{rsvp\_RX}$ value in ms being converted into the number of logical slots.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then $Th\ (p_i, p_j)$ corresponding to each priority value $(p_i, p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the set $S_A$ obtained after executing Example 4, Example 5 and/or Example 6.

In one example, $M_{total}$ is the number of multi-slot resources included in the first resource set, or $M_{total}$ is the number of multi-slot resources included in the second resource set.

In one example, X is a percentage value, or X is a ratio value.

In one example, the set $S_A$ obtained after executing Examples 4-6, and/or the set $S_A$ obtained after executing at least one example among Examples 4-6 are/is marked as third resource sets/a third resource set.

Embodiment VI

In Example 1, one candidate multi-slot resource includes at least one of the following on a frequency domain:

$L_{subCH}$ consecutive sub-channels in one resource pool; or

$L_{RBset}$ consecutive RB sets, wherein each RB set contains $L_{subCH}$ consecutive sub-channels.

One candidate multi-slot resource includes N consecutive slots in one resource pool within a time interval [n+T1,n+T2] on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, \ldots\right)$, and $t\left(t'^{SL}_0, t'^{SL}_1, t'^{SL}_2, \ldots\right)$ denotes a slot set belonging to a sidelink resource pool. The k-th slot in the N consecutive slots in one resource pool within the above slot interval [n+T1,n+T2] is marked as $t'^{SL}_{y+k}$, where k=0, 1, ..., N-1.

In one example, different candidate multi-slot resources may overlap on the time domain.

In one example, in the above resource pool within the time interval [n+T1,n+T2], a resource set composed of multi-slot resources satisfying following features is marked as a first resource set:
on the frequency domain, it includes at least one of the following: $L_{subCH}$ consecutive sub-channels in one resource pool; or $L_{RBset}$ consecutive RB sets, wherein each RB set contains $L_{subCH}$ consecutive sub-channels.

On the time domain, it includes N consecutive slots in one resource pool within the time interval [n+T1,n+T2] .

In one example, a higher layer provides one or more PSSCH/PSCCH transmission parameters including the number N of slots, wherein the number N of the slots represents the number of consecutive slots in one resource pool included by one candidate multi-slot resource.

As shown in FIG. 3, one candidate multi-slot resource includes N slots, where N=4. The serial number of the k-th slot in the N slots is marked as $t'^S_{y+L_k}$, where k=0, 1, ..., N-1. For the k-th slot in the N slots, the serial number of the slot in one resource pool is y+k, where y+k is a subscript of $t'^S_{y+L_k}$. For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. In the figure, [n+T1, n+T2] includes 12 physical slots 11-22. The multi-slot resource in the figure includes slots with physical slot serial numbers of

$$t'^{SL}_{y+k} = \{16, 17, 19, 20\}.$$

In Example 2, a sensing window is defined as a slot in $[n-T_0, n-T^{SL}_{proc,0}]$, the unit of $T_0$ is slots, and $T^{SL}_{proc,0}$ is a value depending on an SCS configuration $\mu_{SL}$ of an SL BWP. One piece of UE monitors all or part of slots in slots belonging to a sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T_p^{SL}_{roc,0}$ and $\mu_{SL}$ is as shown in Table 1.

In Example 3, a parameter Th $(p_i, p_j)$ is set as the i-th RSRP threshold in sl-Thres-RSRP-List, and i=$p_i$+($p_j$-1)*8. sl-Thres-RSRP-List is an RSRP threshold list, this parameter provides an RSRP threshold of each ($p_i$, $p_j$), $p_i$ is a value of a priority field in a received SCI format 1-A, and $p_j$ is a transmission priority of a selected resource. The sending priority $p_j$ may also be marked as $prio_{TX}$.

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set.

In one example, the first terminal determining the second resource set includes: defining the second resource set as time-frequency resources with consecutive physical slots in the first resource set.

In one example, the first terminal determining the second resource set includes: excluding time-frequency resources with inconsecutive physical slots in the first resource set.

In Example 4, a set $S_A$ is initialized as the second resource set in above Example 3.

In Example 5, one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'^{SL}_m$ is set as the periodicity value, and indicates all sub-channels on one resource pool; and
for any periodicity value allowed by the higher layer parameter (sl-ResourceReservePeriodList), the condition c in Example 6 is met.

In this example, if the number of remaining candidate multi-slot resources in the set $S_A$ is less than $X \cdot M_{total}$, then the set $S_A$ is initialized as a resource set corresponding to all candidate multi-slot resources in above Example 4, namely the set $S_A$ in Example 4, which is also the second resource set in Example 4.

In Example 6, for a multi-slot candidate resource x in the set $S_A$, if a target condition is met, the resource is excluded, wherein the target condition at least includes:

a. UE receives an SCI format 1-A in the slot $t'^{SL}_m$ belonging to the resource pool, and indication information of the SCI format 1-A includes: a field "Resource reservation period" (resource reservation period indicator field, which may or may not exist), used to indicate a value of $P_{rsvp\_TX}$; and a field "Priority" (priority indicator field), indicating a value of $prio_{RX}$;

b. RSRP obtained by measurement is higher than a threshold $Th(prio_{RX}, prio_{TX})$; and

c. according to the SCI format received in the slot $t'^{SL}_m$, slots and resource block sets overlapping with a target resource set are determined, or, according to the SCI format that assumes to be received in the slot $t'^{SL}_{m+q \times P'_{rsvp\_RX}}$, slots and resource block sets overlapping with the target resource set are determined. The target resource set includes at least one of the following:

the multi-slot candidate resource x; or

a frequency-domain resource the same as the multi-slot candidate resource x, with a slot serial number and a slot serial number of the multi-slot candidate resource x increased by $j \times P'_{rsvp_{TX}}$. The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P_{rsvp\_RX}$ value in ms being converted into the number of logical slots.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then Th $(p_i, p_j)$ corresponding to each priority value $(p_i, p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the set $S_A$ obtained after executing Example 4, and/or executing Example 5 and/or executing Example 6.

In one example, $M_{total}$ is the number of multi-slot resources included in the first resource set, or $M_{total}$ is the number of multi-slot resources included in the second resource set.

In one example, X is a percentage value, or X is a ratio value.

In one example, the set $S_A$ obtained after executing Examples 4-6, and/or the set $S_A$ obtained after executing at least one example among Examples 4-6 are/is marked as third resource sets/a third resource set.

Embodiment VII

In Example 1, one candidate multi-slot resource includes at least one of the following on a frequency domain:

$L_{subCH}$ consecutive sub-channels in one resource pool; or

$L_{RBset}$ consecutive RB sets, wherein each RB set contains $L_{subCH}$ consecutive sub-channels.

One candidate multi-slot resource includes N consecutive slots in one resource pool within a time interval $[n+T1, n+T2]$ on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, ...\right)$, and $t\left(t'^{SL}_0, t'^{SL}_1, t'^{SL}_2, ...\right)$ denotes a slot set belonging to a sidelink resource pool. The k-th slot in the N consecutive slots in one resource pool within the above slot interval $[n+T1, n+T2]$ is marked as $t'^{SL}_{y+k}$, where k=0, 1, ..., N-1.

In one example, different candidate multi-slot resources may overlap on the time domain.

In one example, in the above resource pool within the time interval $[n+T1, n+T2]$, a resource set composed of multi-slot resources satisfying following features is marked as a first resource set:

on the frequency domain, it includes at least one of the following: $L_{subCH}$ consecutive sub-channels in one resource pool; or $L_{RBset}$ consecutive RB sets, wherein each RB set contains $L_{subCH}$ consecutive sub-channels.

On the time domain, it includes N consecutive slots in one resource pool within the time interval [n+T1,n+T2].

In one example, a higher layer provides one or more PSSCH/PSCCH transmission parameters including the number N of slots, wherein the number N of the slots represents the number of consecutive slots in one resource pool included by one candidate multi-slot resource.

As shown in FIG. 3, one candidate multi-slot resource includes N slots, where N=4. The serial number of the k-th slot in the N slots is marked as $t'^{S}_{y+}{}^{L}_{k}$, where k=0, 1, ..., N-1. For the k-th slot in the N slots, the serial number of the slot in one resource pool is y+k, where y+k is a subscript of $t'^{S}_{y+}{}^{L}_{k}$. For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. In the figure, [n+T1, n+T2] includes 12 physical slots 11-22. The multi-slot resource in the figure includes slots with physical slot serial numbers of $t'^{SL}_{y+k}$={16, 17, 19, 20}.

In Example 2, a sensing window is defined as a slot in $[n-T_0, n-T^{SL}_{proc,0})$, the unit of $T_0$ is slots, and $T^{SL}_{proc,0}$ is a value depending on an SCS configuration $\mu_{SL}$ of an SL BWP. One piece of UE monitors all or part of slots in slots belonging to a sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T^{SL}_{proc,0}$ and $\mu_{SL}$ is as shown in Table 1.

In Example 3, a parameter Th $(p_i,p_j)$ is set as the i-th RSRP threshold in sl-Thres-RSRP-List, and i=$p_i$+($p_j$-1)*8. sl-Thres-RSRP-List is an RSRP threshold list, this parameter provides an RSRP threshold of each ($p_i$,$p_j$), $p_i$ is a value of a priority field in a received SCI format 1-A, and $p_j$ is a transmission priority of a selected resource. The sending priority $p_j$ may also be marked as $prio_{TX}$.

In Example 4, a set $S_A$ is initialized as the first resource set in above Example 1.

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set.

In one example, the first terminal determining the second resource set includes: excluding time-frequency resources with inconsecutive physical slots in the first resource set. That is, time-frequency resources with inconsecutive physical slots in the set $S_A$ are excluded. The remaining resources obtained after resource exclusion from $S_A$ are still marked as $S_A$.

In Example 5, one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'^{SL}_m$ is set as the periodicity value, and indicates all sub-channels on one resource pool; and
for any periodicity value allowed by the higher layer parameter such as sl-ResourceReservePeriodList, a condition c in Example 6 is met.

In this example, if the number of remaining candidate multi-slot resources in the set $S_A$ is less than $X \cdot M_{total}$, then the set $S_A$ is initialized as a resource set corresponding to all candidate multi-slot resources in above Example 4, namely the set $S_A$ in Example 4, which is also the second resource set in Example 4.

In Example 6, for a multi-slot candidate resource x in the set $S_A$, if a target condition is met, the resource is excluded, wherein the target condition at least includes:

a. UE receives an SCI format 1-A in the slot $t'^{SL}_m$ belonging to the resource pool, and indication information of the SCI format 1-A includes: a field "Resource reservation period" (resource reservation period indicator field, which may or may not exist), used to indicate a value of $P_{rsvp\_RX}$; and a field "Priority" (priority indicator field), indicating a value of $prio_{RX}$;
b. RSRP obtained by measurement is higher than a threshold Th($prio_{RX}$,$prio_{TX}$); and

c. according to the SCI format received in the slot $t'^{SL}_m$, slots and resource block sets overlapping with a target resource set are determined, or, according to the SCI format that assumes to be received in the slot $t'^{SL}_{m+q\times P'_{rsvp\_RX}}$, slots and resource block sets overlapping with the target resource set are determined. The target resource set includes at least one of the following:

the multi-slot candidate resource x; or
a frequency-domain resource the same as the multi-slot candidate resource x, with a slot serial number and a slot serial number of the multi-slot candidate resource x increased by $j\times P'_{rsvp_{TX}}$. The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P_{rsvp\_RX}$ value in ms being converted into the number of logical slots.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then Th $(p_i,p_j)$ corresponding to each priority value $(p_i,p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the set $S_A$ obtained after executing Example 4, and/or executing Example 5 and/or executing Example 6.

In one example, $M_{total}$ is the number of multi-slot resources included in the first resource set, or $M_{total}$ is the number of multi-slot resources included in the second resource set.

In one example, X is a percentage value, or X is a ratio value.

In one example, the set $S_A$ obtained after executing Examples 4-6, and/or the set $S_A$ obtained after executing at least one example among Examples 4-6 are/is marked as third resource sets/a third resource set.

Embodiment VIII

In Example 1, one candidate multi-slot resource includes at least one of the following on a frequency domain:

$L_{subCH}$ consecutive sub-channels in one resource pool; or

$L_{RBset}$ consecutive RB sets, wherein each RB set contains $L_{subCH}$ consecutive sub-channels.

One candidate multi-slot resource includes N consecutive slots in one resource pool within a time interval [n+T1,n+T2] on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, ...\right)$, and $t\left(t'^{SL}_0, t'^{SL}_1, t'^{SL}_2, ...\right)$ denotes a slot set belonging to a sidelink resource pool. The k-th slot in the N consecutive slots in one resource pool within the above slot interval [n+T1,n+T2] is marked as $t'^{SL}_{y+k}$, where k=0, 1, ..., N-1.

In one example, different candidate multi-slot resources may overlap on the time domain.

In one example, in the above resource pool within the time interval [n+T1,n+T2], a resource set composed of multi-slot resources satisfying following features is marked as a first resource set:
on the frequency domain, it includes at least one of the following: $L_{subCH}$ consecutive sub-channels in one resource pool; or $L_{RBset}$ consecutive RB sets, wherein each RB set contains $L_{subCH}$ consecutive sub-channels.

On the time domain, it includes N consecutive slots in one resource pool within the time interval [n+T1,n+T2].

In one example, a higher layer provides one or more PSSCH/PSCCH transmission parameters including the number N of slots, wherein the number N of the slots represents the number of consecutive slots in one resource pool included by one candidate multi-slot resource.

As shown in FIG. 3, one candidate multi-slot resource includes N slots, where N=4. The serial number of the k-th slot in the N slots is marked as $t'^S_{y+}{}^L_k$, where k=0, 1, ..., N-1. For the k-th slot in the N slots, the serial number of the slot in one resource pool is y+k, where y+k is a subscript of $t'^S_{y+}{}^L_k$. For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. [n+T1, n+T2] includes 12 physical slots 11-22. The multi-slot resource in the figure includes slots with physical slot serial numbers of $t'^{SL}_{y+k}=\{16, 17, 19, 20\}$.

In Example 2, a sensing window is defined as a slot in $[n-T_0, n-T^{SL}_{proc,0})$, the unit of $T_0$ is slots, and $T^{SL}_{proc,0}$ is a value depending on an SCS configuration $\mu_{SL}$ of an SL BWP. One piece of UE monitors all or part of slots in slots belonging to a sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T_p{}^{SL}{}_{roc,0}$ and $\mu_{SL}$ is as shown in Table 1.

In Example 3, a parameter Th $(p_i,p_j)$ is set as the i-th RSRP threshold in sl-Thres-RSRP-List, and i=$p_i$+($p_j$-1)*8. sl-Thres-RSRP-List is an RSRP threshold list, this parameter provides an RSRP threshold of each ($p_i$, $p_j$), $p_i$ is a value of a priority field in a received SCI format 1-A, and $p_j$ is a transmission priority of a selected resource. The sending priority $p_j$ may also be marked as $prio_{TX}$.

In Example 4, a set $S_A$ is initialized as the first resource set in above Example 1.

In Example 5, a first terminal determines a second resource set, and one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'_m{}^{SL}$ is set as the periodicity value, and indicates all sub-channels on one resource pool; and

for any periodicity value allowed by the higher layer parameter (sl-ResourceReservePeriodList), the condition c in Example 6 is met.

Moreover, the first terminal excludes resources with inconsecutive physical slots in the first resource set. That is, resources with inconsecutive physical slots in the set $S_A$ are excluded.

In this example, if a resource set corresponding to all candidate multi-slot resources in the set $S_A$ is the set $S_A$ in Example 4, which is the first resource set in Example 4.

The $S_A$ obtained after executing Example 5 is marked as the second resource set.

a. UE receives an SCI format 1-A in the slot $t'^{SL}_m$ belonging to the resource pool, and indication information of the SCI format 1-A includes: a field "Resource reservation period" (resource reservation period indicator field, which may or may not exist), used to indicate a value of $P_{rsvp\_RX}$; and a field "Priority" (priority indicator field), indicating a value of $prio_{RX}$;

b. RSRP obtained by measurement is higher than a threshold Th($prio_{RX}$,$prio_{TX}$); and

c. according to the SCI format received in the slot $t'^{SL}_m$, slots and resource block sets overlapping with a target resource set are determined, or, according to the SCI format that assumes to be received in the slot $t'^{SL}_{m+q\times P'_{rsvp\_RX}}$, slots and resource block sets overlapping with the target resource set are determined. The target resource set includes at least one of the following:

the multi-slot candidate resource x; or
a frequency-domain resource the same as the multi-slot candidate resource x, with a slot serial number and a slot serial number of the multi-slot candidate resource x increased by $j\times P'_{rsvp_{TX}}$, The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P'_{rsvp\_RX}$ value in ms being converted into the number of logical slots.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then Th $(p_i, p_j)$ corresponding to each priority value $(p_i, p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the set $S_A$ obtained after executing Example 6.

In one example, $M_{total}$ is the number of multi-slot resources included in the first resource set, or $M_{total}$ is the number of multi-slot resources included in the second resource set.

In one example, X is a percentage value, or X is a ratio value.

In one example, the set $S_A$ obtained after executing Example 6 is marked as a third resource set.

Embodiment IX

In Example 1, one candidate multi-slot resource includes at least one of the following on a frequency domain:

$L_{subCH}$ consecutive sub-channels in one resource pool; or

$L_{RBset}$ consecutive RB sets, wherein each RB set contains $L_{subCH}$ consecutive sub-channels.

One candidate multi-slot resource includes N consecutive slots in one resource pool within a time interval [n+T1,n+T2] on a time domain, the first slot in the N consecutive slots is marked as slot $t'^{SL}_y$, slot $t'^{SL}_y$ belongs to one slot in one resource pool, slot $t'^{SL}_y$ is one slot in a group of slots $\left(t'^{SL}_0, t'^{SL}_1, t'^{SL}_2, ...\right)$, and $t\left(t'^{SL}_0, t'^{SL}_1, t'^{SL}_2, ...\right)$ denotes a slot set belonging to a sidelink resource pool. The k-th slot in the N consecutive slots in one resource pool within the above slot interval [n+T1,n+T2] is marked as $t'^{SL}_{y+k}$, where k=0, 1, ..., N-1.

In one example, different candidate multi-slot resources may overlap on the time domain.

In one example, in the above resource pool within the time interval [n+T1,n+T2], a resource set composed of multi-slot resources satisfying following features is marked as a first resource set:

on the frequency domain, including at least one of the following: $L_{subCH}$ consecutive sub-channels in one resource pool; or

$L_{RBset}$ consecutive RB sets, wherein each RB set contains $L_{subCH}$ consecutive sub-channels.

On the time domain, it includes N consecutive slots in one resource pool within the time interval [n+T1,n+T2] .

In one example, a higher layer provides one or more PSSCH/PSCCH transmission parameters including the number N of slots, wherein the number N of the slots represents the number of consecutive slots in one resource pool included by one candidate multi-slot resource.

As shown in FIG. 3, one candidate multi-slot resource includes N slots, where N=4. The serial number of the k-th slot in the N slots is marked as $t'^{SL}_{y+k}$, where k=0, 1, ..., N-1. For the k-th slot in the N slots, the serial number of the slot in one resource pool is y + k, where y + k is a subscript of $t'^{SL}_{y+k}$ .For the candidate multi-slot resource in the figure, y=x+4, a time-domain slot of the candidate multi-slot resource includes the {y, y+1, y+2, y+3}-th slots in one resource pool, namely including the {x+4, x+5, x+6, x+7}-th slots in one resource pool. A slot serial number in one resource pool is referred to as a logical slot serial number, and the multi-slot resource in the figure includes slots with logical slot serial numbers {x+4, x+5, x+6, x+7}. A regular slot serial number is referred to as a physical slot serial number. In the figure, [n+T1, n+T2] includes 12 physical slots 11-22. The multi-slot resource in the figure includes slots with physical slot serial numbers of

$$t'^{SL}_{y+k}=\{16, 17, 19, 20\}$$ .

In Example 2, a sensing window is defined as a slot in $[n-T_0, n-T^{SL}_{proc,0})$ , the unit of $T_0$ is slots, and $T^{SL}_{proc,0}$ is a value depending on an SCS configuration $\mu_{SL}$ of an SL BWP. One piece of UE monitors all or part of slots in slots belonging to a sidelink resource pool within the sensing window. Moreover, another piece of UE does not monitor slots in which transmission of the UE occurs within the sidelink resource pool. One piece of UE performs PSCCH decoding and RSRP measurement on the above slots which are monitored by the UE. In a particular example, the relationship between $T_p{}^{SL}{}_{roc,0}$ and $\mu_{SL}$ is as shown in Table 1.

In Example 3, Th $(p_i,p_j)$ is set as the i-th RSRP threshold in sl-Thres-RSRP-List, and $i=p_i+ (p_j-1)*8$. sl-Thres-RSRP-List is an RSRP threshold list, this parameter provides an RSRP threshold of each $(p_i, p_j)$, $p_i$ is a value of a priority field in a received SCI format 1-A, and $p_j$ is a transmission priority of a selected resource. The sending priority $p_j$ may also be marked as $prio_{TX}$.

In Example 4, a set $S_A$ is initialized as the first resource set in above Example 1.

In Example 5, one piece of UE excludes candidate multi-slot resources meeting a target condition from the set $S_A$ in above Example 4, wherein the target condition includes the following conditions:

for any periodicity value allowed by a higher layer parameter sl-ResourceReservePeriodList, a field "Resource reservation period" of an assumed SCI format 1-A on a slot $t'_m{}^{SL}$ is set as the periodicity value, and indicates all sub-channels on one resource pool; and
for any periodicity value allowed by the higher layer parameter (sl-ResourceReservePeriodList), the condition c in Example 6 is met.

In this example, if the number of remaining candidate multi-slot resources in the set $S_A$ is less than $X \cdot M_{total}$, then, the set $S_A$ is initialized as a resource set corresponding to the candidate multi-slot resources in above Example 4.

In Example 6, for a multi-slot candidate resource x in the set $S_A$, if a target condition is met, the resource is excluded, wherein the target condition at least includes:

a. UE receives an SCI format 1-A in the slot $t'_m{}^{SL}$ belonging to the resource pool, and indication information of the SCI format 1-A includes: a field "Resource reservation period" (resource reservation period indicator field, which may or may not exist), used to indicate a value of $P_{rsvp\_RX}$; and a field "Priority" (priority indicator field), indicating a value of $prio_{RX}$;
b. RSRP obtained by measurement is higher than a threshold $Th(prio_{RX},prio_{TX})$; and
c. according to the SCI format received in the slot $t'_m{}^{SL}$, slots and resource block sets overlapping with a target resource set are determined, or, according to the SCI format that assumes to be received in the slot $t'^{SL}_{m+q \times P'_{rsvp\_RX}}$, slots and resource block sets overlapping with the target resource set are determined. The target resource set includes at least one of the following:

the multi-slot candidate resource x; or
a frequency-domain resource the same as the multi-slot candidate resource x, with a slot serial number and a slot serial number of the multi-slot candidate resource x increased by $j \times P'_{rsvp_{TX}}$. The slot serial number here is a slot serial number in one resource pool, namely a logical slot serial number, and j is a non-negative integer and has a certain value range.

The above $P'_{rsvp_{TX}}$ is a positive integer, and in a particular example, $P'_{rsvp_{TX}}$ is a $P_{rsvp\_TX}$ value in ms being converted into the number of logical slots.

The above $P'_{rsvp\_RX}$ is a $P_{rsvp\_RX}$ value in ms being converted into the number of logical slots.

In one example, the first resource set is the set $S_A$ obtained after executing resource exclusion in above Example 6.

In one example, a first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set.

In one example, the first terminal determining the second resource set includes: excluding time-frequency resources with inconsecutive physical slots in the first resource set. That is, time-frequency resources with inconsecutive physical slots in the set $S_A$ are excluded.

In one example, the second resource set is the set $S_A$ obtained after excluding the time-frequency resources with inconsecutive physical slots in the first resource set.

In one example, in above Example 6, the set $S_A$ before resource exclusion is the set $S_A$ obtained after executing resource exclusion in above Example 5, or the set $S_A$ obtained after initializing the set $S_A$ in above Example 5, or the set $S_A$ obtained after executing resource exclusion in above Example 5 and initializing the set $S_A$ in Example 5.

In Example 7, if the remaining candidate multi-slot resources in the set $S_A$ meet conditions, then Th $(p_i,p_j)$ corresponding to each priority value $(p_i,p_j)$ is increased by 3 dB, and Example 7 continues to be executed. The conditions here at least include: the remaining candidate multi-slot resources in the set $S_A$ are less than $X \cdot M_{total}$.

In one example, the set $S_A$ in Example 7 is the above second resource set.

In one example, $M_{total}$ is the number of multi-slot resources included in the first resource set.

In one example, X is a percentage value, or X is a ratio value.

In one example, after determining the second resource set, the first terminal does not perform resource exclusion anymore.

In one example, the first terminal reports the second resource set to the higher layer.

In one example, the higher layer selects at least one resource from the second resource set for sidelink information transmission.

In one example, the higher layer of the first terminal selects at least one resource from the second resource set for sending sidelink information which includes PSCCH/PSSCH transmission.

In one example, PSCCH/PSSCH transmission includes at least one of the following: PSCCH transmission; PSSCH transmission; and PSCCH transmission and PSSCH transmission.

Embodiment X

In one example, a higher layer of a first terminal requests the first terminal to determine a resource subset, and in order to trigger this process, in a slot n, the higher layer provides one or more PSSCH/PSCCH transmission parameters.

In one example, the above slot n is marked as first time.

In one example, the above higher layer includes at least one of the following: a MAC layer or an RRC layer.

In one example, the one or more PSSCH/PSCCH transmission parameters provided by the higher layer includes the number of slots, and the number of slots represents the number of consecutive slots in one resource pool. The number of slots is marked as N or $N_{slot,MCSt}$.

In one example, the above number of slots includes at least one of the following:

the number of consecutive slots for multi-consecutive-slot transmission (MCSt);
the number of consecutive slots;
the number of consecutive logical slots for multi-consecutive-slot transmission (MCSt); or
the number of consecutive logical slots.

MCSt represents multi-consecutive-slot transmission, and multiple consecutive slots represent that slots for PSCCH/PSSCH transmission belong to consecutive slots within the range of one resource pool.

In one example, the number of consecutive slots for MCSt is N, representing that PSCCH/PSSCH transmission includes N consecutive slots within the range of one resource pool on a time domain.

In one example, the number of consecutive slots is N, representing that PSCCH/PSSCH transmission includes N consecutive slots within the range of one resource pool on a time domain.

In one example, the number of consecutive logical slots for MCSt is N, representing that PSCCH/PSSCH transmission includes N consecutive slots within the range of one resource pool on a time domain.

In one example, the number of consecutive logical slots is N, representing that PSCCH/PSSCH transmission includes N consecutive slots within the range of one resource pool on a time domain.

In one example, the above number of slots represents the number of consecutive slots of a resource in one resource pool. For N consecutive slots corresponding to the number N of the consecutive slots, the serial numbers of the N slots may be inconsecutive, that is, the serial numbers of the physical slots may be inconsecutive. However, the serial numbers of slots in one resource pool are consecutive, that is, the serial numbers of the logical slots in one resource pool are consecutive.

In one example, except the number of slots, the one or more PSSCH/PSCCH transmission parameters provided by the higher layer further include a remaining packet delay budget, which includes at least one of the following:

the number of slots is less than or equal to the remaining packet delay budget;
the number of slots is converted into a value, which is less than or equal to the remaining packet delay budget;
the remaining packet delay budget is converted into a value, and the number of slots is less than or equal to the converted value;
the number of slots corresponds to one value, which is less than or equal to the remaining packet delay budget; or
the number of slots is less than or equal to a difference between the remaining packet delay budget and one numeric value, the one numeric value represents the number of slots, and the one numeric value depends on a subcarrier spacing (SCS) configuration of an SL BWP.

In one example, the above one numeric value is marked as $T_p{}^{SL}{}_{roc,0}$, and the relationship between $T_p{}^{SL}{}_{roc,0}$ and $\mu_{SL}$ is as shown in Table 1. In Table 1, $\mu_{SL}$ is the SCS configuration of the SL BWP.

Table 1

| Mapping relationship between $T^{SL}_{proc,0}$ and subcarrier spacing | |
|---|---|
| $\mu_{SL}$ | $\overline{T^{SL}_{proc,0}}$ [slots] |
| 0 | 1 |
| 1 | 1 |
| 2 | 2 |
| 3 | 4 |

In one example, the remaining packet delay budget represents the number of remaining slots, and if a packet is not sent within the number of remaining slots, it means that the packet has expired.

In one example, the number of slots is converted into one value M, the number N of slots represents the number of the logical slots, and the number N of the logical slots is converted into the number M of the physical slots.

In one example, the number of slots corresponds to one value M, the number N of slots represents the number of the logical slots, and the number of the physical slots corresponding to the number N of the logical slots is M.

In one example, the remaining packet delay budget is converted into a value Q, the unit of the remaining packet delay budget is slots (recorded as physical slots), and the remaining packet delay budget is converted into the number Q of logical slots with the unit of logical slots.

In one example, except the number of slots, the one or more PSSCH/PSCCH transmission parameters provided by the higher layer further include a resource reservation interval. The resource reservation interval is marked as $P'_{rsvp\_TX}$,

the unit of $P'_{rsvp\_TX}$ is ms, and $P'_{rsvp\_TX}$ is converted into a value $P'_{rsvp\_TX}$ with the unit of logical slots, including at least one of the following:

the number of slots is less than or equal to $P'_{rsvp\_TX}$ ;

the number of slots is less than or equal to a sum of $P'_{rsvp\_TX}$ and one compensation value;

the number of slots is less than or equal to a product of $2^\mu$ and $P'_{rsvp\_TX}$, the value of $\mu$ is a non-negative integer, and $\mu$ represents an SCS configuration of an SL BWP; or

the number of slots is less than or equal to a sum of a product of $2^\mu$ and $P'_{rsvp\_TX}$ and one compensation value, the value of $\mu$ is a non-negative integer, and $\mu$ represents an SCS configuration of an SL BWP.

In a particular example, $\mu$ corresponds to $\mu_{SL}$ in Table 1.

In one example, the first terminal determines a second resource set, the determined second resource set is a subset of a first resource set, the first resource set includes at least one time-frequency resource with consecutive slots included in one resource pool within a time interval [n+T1, n+T2], and the determined second resource set includes time-frequency resources with consecutive slots in the first resource set.

In one example, the higher layer of the first terminal requests the first terminal to determine a resource subset, and in order to trigger this process, in the slot n, the higher layer provides one or more PSSCH/PSCCH transmission parameters.

In one example, the first terminal performs resource exclusion on one resource set. The one resource set is a resource set corresponding to the at least one time-frequency resource above, or a subset of a resource set corresponding to the at least one time-frequency resource above.

In one example, the at least one time-frequency resource with consecutive slots included in one resource pool is within the time interval [n+T1, n+T2].

In one example, the above time n is marked as first time, T1 is marked as second time, and T3 is marked as third time.

In one example, the one or more PSSCH/PSCCH transmission parameters provided by the higher layer include the number N of slots. The first terminal determines the second time T1, and the determined T1 meets at least one of the following conditions:

T1 is less than or equal to a difference between the remaining packet delay budget and the number N of consecutive slots plus 1;
T1 is less than or equal to a difference between the remaining packet delay budget and a value M plus 1; or
T1 is less than or equal to $\min(T_{p}{}^{SL}{}_{roc,1}$, remaining packet delay budget-N+1), which is a numeric value depending on an SCS configuration of a sidelink bandwidth part (BWP).

In one example, the number N of consecutive slots with the unit of logical slots is converted into one value M with the unit of physical slots.

In one example, the one or more PSSCH/PSCCH transmission parameters provided by the higher layer include the number of slots. The first terminal determines third time T2, and the determined T2 meets at least one of the following conditions:

T2-T1+1 is greater than or equal to the number N of slots;
the number of slots is less than or equal to a difference between T2 and a numeric value, the numeric value represents the number of slots, and the numeric value depends on an SCS configuration of an SL BWP; or

The number of slots is less than or equal to T2.

In one example, the above numeric value depending on the SCS configuration of the SL BWP is marked as $T_{proc,0}^{SL}$, as shown in Table 1.

In one example, the remaining packet delay budget is in a unit of slots, the remaining packet delay budget may also be referred to as a remaining pack delay budget.

Embodiment XI

In one example, a channel is defined as a frequency-domain resource with a bandwidth generally being 20 MHz, and belongs to an unlicensed spectrum. At the unlicensed spectrum, a communication node performs a channel access procedure on one or more channels, and only when the one or more channels are evaluated as available, can information be sent on this channel/these channels.

One channel may include a plurality of RBs available for information transmission, which are called an RB set. Except the RB set, one channel may further include other RBs used for a guard band.

In one example, the communication node performs the channel access procedure by taking one or more channels as a unit, to evaluate whether the channels are available.

In one example, the communication node performs the channel access procedure by taking one or more RB sets as a unit, to evaluate whether the channels are available.

In one example, the channel access procedure is equivalent to listen before talk (LBT) monitoring.

Embodiment XII

In one example, one resource pool contains a plurality of time-frequency resources, includes a plurality of frequency-domain resources on a frequency domain, and contains a plurality of time domain units on a time domain, for example, each time domain unit is one slot.

In one example, the time-frequency resources contained in one resource pool are time-frequency resources available for sidelink communication (or time-frequency resources available for PSSCH transmission).

In one example, one resource pool includes a plurality of RB sets on the frequency domain.

In one example, a first terminal performs resource exclusion on time-frequency resources in one resource pool within a time range [n+T1, n+T2], and a time-frequency resource set before exclusion is: time-frequency resources falling within the time range [n+T1, n+T2] among the plurality of time-frequency resources contained in one resource pool. For the convenience of description, a time interval corresponding to the time range [n+T1, n+T2] is marked as a selecting window.

FIG. 4 is a schematic diagram of resource exclusion for time-frequency resources on one resource pool within a time range provided by an embodiment. As shown in FIG. 4, the first terminal receives SCI within a time-domain sensing window. The first terminal receives SCI sent by other terminals, and the SCI sent by other terminals is sent via a PSCCH. Other terminals send a PSSCH in a slot where the PSCCH is sent. Other terminals send a PSCCH DMRS in a time domain region where the PSCCH is sent. Likewise, other terminals send a PSSCH DMRS in a time domain region where the PSSCH is sent. The SCI sent by other terminals includes indications of time-frequency resources reserved by the terminals.

The first terminal determines the time-frequency resources reserved by other terminals by receiving the above SCI. The first terminal selects (excludes) resources in a time-domain resource selecting window based on the reception of the SCI. The time-domain resource selecting window here is a time interval, or a slot set within a time interval. As shown in FIG. 4, the time-domain resource selecting window includes a plurality of resources, wherein some of the resources overlap with the time-frequency resources reserved by other terminals, while some of the resources do not overlap with the time-frequency resources reserved by other terminals. The first terminal excludes resources with RSRP higher than a threshold in one resource pool within the resource selecting window through RSRP measurement, and remaining resources are marked as a resource set A, or a resource subset of the remaining resources is marked as a set A. The first terminal selects time-frequency resources from the set A for sending sidelink information.

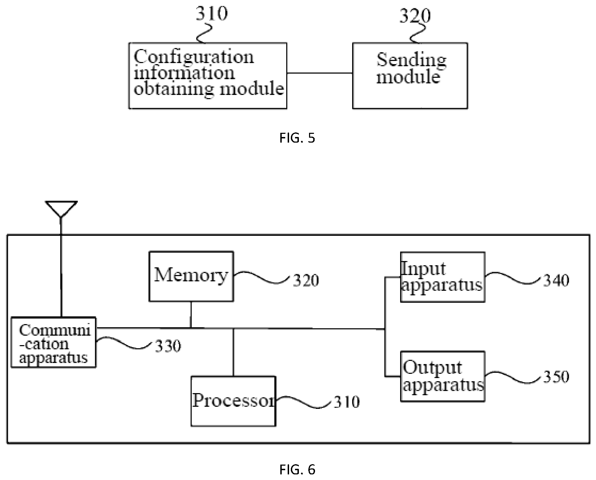

An embodiment of the present application further provides a resource determination apparatus. FIG. 5 is a schematic structural diagram of a resource determination apparatus provided by an embodiment. As shown in FIG. 5, the resource determination apparatus includes:

a determining module 210, configured to determine a second resource set, wherein any time-frequency resource in the second resource set is a time-frequency resource with consecutive logical slots; and

an excluding module 220, configured to exclude at least one time-frequency resource in the second resource set, wherein remaining time-frequency resources in the second resource set after resource exclusion are a third resource set.

In the resource determination apparatus of this embodiment, by determining the second resource set and by determining the third resource set from the second resource set, the time-frequency resources with consecutive physical slots are included, so that the time-frequency resources selected by a terminal are consecutive on a time domain, and fall within the same group of a plurality of consecutive channels on a frequency domain. On this basis, the terminal does not need to perform channel contention via a channel access procedure before transmission on each time-frequency resource in the selected time-frequency resources. After the terminal successfully contends for a channel via the channel access procedure before transmission on an i-th time-frequency resource in N selected time-frequency resources, before transmission on time-frequency resources after the i-th time-frequency resource, the terminal may directly perform transmission on these resources without contending for channels, thereby increasing the channel access opportunity.

In one embodiment, the second resource set is a subset of a first resource set, the first resource set includes one or more time-frequency resources with consecutive logical slots in one resource pool within a set time interval, and any time-frequency resource in the determined second resource set is a time-frequency resource with consecutive logical slots and consecutive physical slots.

In one embodiment, the apparatus further includes:

a selecting module, configured to select at least one target resource from the third resource set or a subset of the third resource set; and

a sending module, configured to send sidelink information or a physical sidelink channel via all or part of resources in the at least one target resource.

In one embodiment, a frequency domain of each time-frequency resource in the second resource set includes at least one of the following:

one or more consecutive sub-channels in one resource pool; or

one or more consecutive resource block sets, and one or more consecutive sub-channels included in each resource block set by each time-frequency resource.

In one embodiment, determining the second resource set includes:
excluding time-frequency resources with inconsecutive physical slots in the first resource set, wherein remaining time-frequency resources in the first resource set after resource exclusion are the second resource set.

In one embodiment, determining the second resource set includes:
defining the second resource set as time-frequency resources with consecutive physical slots in the first resource set.

In one embodiment, the apparatus further includes:
a parameter providing module, configured to provide physical sidelink transmission parameters to a first terminal via a higher layer, wherein the physical sidelink transmission parameters include the number of consecutive slots.

Physical sidelink transmission includes one of the following: PSCCH and PSSCH transmission, PSCCH transmission, or PSSCH transmission.

In one embodiment, the number of the consecutive slots includes at least one of the following:

the number of consecutive physical slots for multi-consecutive-slot transmission;
the number of consecutive physical slots;
the number of consecutive logical slots for multi-consecutive-slot transmission; or
the number of consecutive logical slots.

In one embodiment, the physical sidelink transmission parameters further include at least one of the following:

a remaining packet delay budget;
the number of sub-channels for PSSCH transmission;
the number of resource block sets used in PSCCH and PSSCH transmission;
the number of sub-channels used in each resource block set among the resource block sets used in PSCCH and PSSCH transmission;
a resource reservation interval; or
resource block sets where consecutive LBT fails.

In one embodiment, the physical sidelink transmission parameters further include a remaining packet delay budget.
The remaining packet delay budget meets at least one of the following:

the number of the consecutive slots is less than or equal to the remaining packet delay budget;
a conversion value of the number of the consecutive slots is less than or equal to the remaining packet delay budget;
the number of the consecutive slots is less than or equal to a conversion value of the remaining packet delay budget;
a corresponding value of the number of the consecutive slots is less than or equal to the remaining packet delay budget; or
the number of the consecutive slots is less than or equal to a difference between the remaining packet delay budget and a first set value, wherein the first set value is determined based on a subcarrier spacing configuration of a sidelink bandwidth part.

In one embodiment, the physical sidelink transmission parameters further include a resource reservation interval, the resource reservation interval is converted into a value with a unit of logical slots, and the value with the unit of logical slots is marked as a conversion value.
The conversion value meets at least one of the following:

the number of the consecutive slots is less than or equal to the conversion value;
the number of the consecutive slots is less than or equal to a sum of the conversion value and one compensation value;
the number of the consecutive slots is less than or equal to a product of $2^\mu$ and the conversion value; or
the number of the consecutive slots is less than or equal to a sum of the product of $2^\mu$ and the conversion value and one compensation value;
wherein $\mu$ is a non-negative integer, and $\mu$ is determined based on a subcarrier spacing configuration of a sidelink bandwidth part.

In one embodiment, the physical sidelink transmission parameters further include a remaining packet delay budget.
Any resource in the first resource set is not earlier than a sum of first time and second time, wherein the second time meets at least one of the following:

the second time is less than or equal to a difference between the remaining packet delay budget and the number of consecutive slots plus one; or
the second time is less than or equal to a difference between the remaining packet delay budget and a second set value plus one, wherein the second set value is obtained by converting the number of the consecutive slots with a unit of logical slots into a value with a unit of physical slots.

In one embodiment, the physical sidelink transmission parameters further include a remaining packet delay budget.
Any resource in the first resource set is not earlier than a sum of first time and second time, and not later than a sum of the first time and third time.
The third time meets at least one of the following:

the number of consecutive slots is less than or equal to a difference between the third time and the second time plus one;

the number of the consecutive slots is less than or equal to a difference between the third time and a third set value plus one, wherein the third set value is determined based on a subcarrier spacing configuration of a sidelink bandwidth part; or

the number of the consecutive slots is less than or equal to the third time.

In one embodiment, any time-frequency resource in the second resource set is a time-frequency resource with consecutive logical slots and consecutive physical slots.

The resource determination apparatus provided by this embodiment and the resource determination method provided by the above embodiment belong to the same inventive idea. Technical details not described in detail in this embodiment can be found in any of the above embodiments, and this embodiment has the same beneficial effects as obtained by performing the resource determination method.

An embodiment of the present application further provides a communication node. FIG. 6 is a schematic diagram of a hardware structure of a communication node provided by an embodiment. As shown in FIG. 6, the communication node provided by the present application includes a processor 510 and a memory 520. There may be one or more processors 510 in the communication node, and one processor 510 is taken as an example in FIG. 6. The memory 520 is configured to store one or more programs. The one or more programs are executed by the one or more processors 510 to enable the one or more processors 510 to implement the resource determination method in the embodiment of the present application.

The communication node further includes: a communication apparatus 530, an input apparatus 540, and an output apparatus 550.

The processor 510, the memory 520, the communication apparatus 530, the input apparatus 540 and the output apparatus 550 in the communication node may be connected through a bus or other means, and bus connection is taken as an example in FIG. 6.

The input apparatus 540 may be configured to receive input digital or character information and generate key signal input related to user settings and function control of the communication node. The output apparatus 550 may include a display device such as a display screen.

The communication apparatus 530 may include a receiver and a transmitter. The communication apparatus 530 is configured to perform information receiving-sending communication under the control of the processor 510.

As a computer-readable storage medium, the memory 520 may be configured to store software programs, computer-executable programs and modules, such as program instructions/modules corresponding to the resource determination method of the embodiment of the present application (for example, the first determining module 310 and the excluding module 320 in the resource determination apparatus). The memory 520 may include a program storage area and a data storage area, wherein the program storage area may store an operating system and an application required for at least one function; and the data storage area may store data created according to use of the communication node. In addition, the memory 520 may include a high random access memory, and may also include a non-volatile memory, such as at least one disk storage device, a flash memory device, or other non-volatile solid-state storage devices. In some instances, the memory 520 may further include a memory which is remotely disposed relative to the processor 510, and the remote memory may be connected to the communication node through a network. Examples of the foregoing network include, but are not limited to, the Internet, an Intranet, a local area network, a mobile communication network, and a combination thereof.

An embodiment of the present application further provides a storage medium. The storage medium stores a computer program, and the computer program, when executed by a processor, implements the resource determination method of any one of the embodiments of the present application. The method includes: determining a second resource set, wherein any time-frequency resource in the second resource set is a time-frequency resource with consecutive logical slots; and excluding at least one time-frequency resource in the second resource set, wherein remaining time-frequency resources in the second resource set after resource exclusion are a third resource set.

The computer storage medium of the embodiment of the present application may adopt any combination of one or more computer-readable media. The computer-readable media may be computer-readable signal media or computer-readable storage media. The computer-readable storage media may be, for example, but is not limited to, an electrical, magnetic, optical, electromagnetic, infrared, or semiconductor system, apparatus, or device, or any combination of the above. More specific examples (non-exhaustive list) of the computer-readable storage media include: electrical connections with one or more wires, a portable computer disk, a hard disk, a random access memory (RAM), a read only memory (ROM), an erasable programmable read only memory (EPROM), a flash memory, an optical fiber, a portable CD-ROM, an optical storage device, a magnetic storage device or any suitable combination of the above. The computer-readable storage media may be any tangible medium containing or storing a program, and the program may be used by or used in combination with an instruction execution system, an apparatus, or a device.

The computer-readable signal media may include a data signal propagated in a baseband or as part of a carrier wave, in which a computer-readable program code is carried. This propagated data signal may take a variety of forms, including, but are not limited to, electromagnetic signals, optical signals, or any suitable combination of the above. The computer-readable signal media may also be any computer-readable medium other than the computer-readable storage media, and the computer-readable media may send, propagate, or transmit a program for use by or use in combination with an instruction execution system, apparatus, or device.

The program code contained on the computer-readable medium may be transmitted by any suitable medium, including but not limited to: a wireless medium, an electric wire, an optical cable, a radio frequency (RF), etc., or any suitable combination of the above.

The computer program code for performing the operations of the present application may be written in one or more programming languages or their combinations, including object-oriented programming languages such as Java, Smalltalk, and C++, and conventional procedural programming languages such as "C" language or similar programming languages. The program code may be executed entirely on a user computer, partly on a user computer, as a stand-alone software package, partly on a user computer and partly on a remote computer, or entirely on a remote computer or a server. In a case where a remote computer is involved, the remote computer may be connected to a user computer through any kind of networks, including a local area network (LAN) or a wide area network (WAN), or may be connected to an external computer (for example, connected through the Internet using an Internet service provider).

The above is merely the exemplary embodiments of the present application and are not intended to limit the scope of protection of the present application.

Those skilled in the art should understand that the term "user terminal" covers any suitable type of wireless user equipment, such as mobile telephones, portable data processing apparatuses, portable web browsers, or vehicular mobile stations.

In general, various embodiments of the present application may be implemented in hardware or dedicated circuits, software, logic, or any combination thereof. For example, some aspects may be implemented in hardware, while other aspects may be implemented in firmware or software that may be executed by a controller, microprocessor, or other computing apparatuses, although the present application is not limited thereto.

The embodiments of the present application may be implemented by executing computer program instructions by a data processor of a mobile apparatus, for example in a processor entity, or by hardware, or by a combination of software and hardware. The computer program instructions may be assembly instructions, Instruction Set Architecture (ISA) instructions, machine instructions, machine-related instructions, microcode, firmware instructions, status setting data, or source code or object code written in any combination of one or more programming languages.

Any block diagrams of logic flows in the accompanying drawings of the present application may represent program steps, or interconnected logic circuits, modules, and functions, or a combination of program steps and logic circuits, modules, and functions. The computer programs may be stored on a memory. The memory may be of any type suitable for the local technical environment and may be implemented using any suitable data storage technology, such as, but not limited to, a read-only memory (ROM), a random access memory (RAM), an optical memory apparatus and system (a digital video disc (DVD), or a compact disc (CD), etc. A computer-readable medium may include a non-transitory storage medium. A data processor may be of any type suitable for the local technical environment, such as, but is not limited to, a general-purpose computer, a special-purpose computer, a microprocessor, a digital signal processor (DSP), an application specific integrated circuit (ASIC), a field-programmable gate arrays (FPGA), and processors based on multi-core processor architectures.

By way of exemplary and nonrestrictive examples, detailed descriptions of exemplary embodiments of the present application have been provided above. However, various modifications and adaptations of the above embodiments will become apparent to those skilled in the art when considered in conjunction with the accompanying drawings and the claims, without departing from the scope of the present application. Accordingly, the proper scope of the present application will be determined by the claims.

**Claims**

1. A resource determination method, comprising:

   determining a second resource set, wherein any time-frequency resource in the second resource set is a time-frequency resource with consecutive logical slots; and
   excluding at least one time-frequency resource in the second resource set, wherein remaining time-frequency resources in the second resource set after resource exclusion are a third resource set.

2. The method according to claim 1, wherein the second resource set is a subset of a first resource set, the first resource set comprises one or more time-frequency resources with consecutive logical slots in one resource pool within a set time interval, and any time-frequency resource in the second resource set is a time-frequency resource with consecutive logical slots and consecutive physical slots.

3. The method according to claim 1, wherein a frequency domain of each time-frequency resource in the second resource set comprises at least one of the following:

   one or more consecutive sub-channels in one resource pool; or
   one or more consecutive resource block sets, and one or more consecutive sub-channels comprised in each resource block set by each time-frequency resource.

4. The method according to claim 2, wherein determining the second resource set comprises:
   excluding time-frequency resources with inconsecutive physical slots in the first resource set, wherein remaining time-frequency resources in the first resource set after resource exclusion are the second resource set.

5. The method according to claim 2, wherein determining the second resource set comprises:
   defining the second resource set as time-frequency resources with consecutive physical slots in the first resource set.

6. The method according to claim 1, further comprising:

   providing physical sidelink transmission parameters to a first terminal via a higher layer, wherein the physical sidelink transmission parameters comprise a number of consecutive slots;
   wherein the physical sidelink transmission comprises one of the following: physical sidelink control channel PSCCH and physical sidelink shared channel PSSCH transmission, PSCCH transmission, and PSSCH transmission.

7. The method according to claim 6, wherein the number of the consecutive slots comprises at least one of the following:

   a number of consecutive physical slots for multi-consecutive-slot transmission;
   a number of consecutive physical slots;
   a number of consecutive logical slots for multi-consecutive-slot transmission; or
   a number of consecutive logical slots.

8. The method according to claim 6, wherein the physical sidelink transmission parameters further comprise at least one of the following:

   a remaining packet delay budget;
   a number of sub-channels for PSSCH transmission;
   a number of resource block sets used in PSCCH and PSSCH transmission;
   a number of sub-channels used in each resource block set among the resource block sets used in PSCCH and PSSCH transmission;
   a resource reservation interval; or
   resource block sets where consecutive listen before talk LBT fails.

9. The method according to claim 6, wherein the physical sidelink transmission parameters further comprise a remaining packet delay budget; and
   the remaining packet delay budget meets at least one of the following:

   the number of the consecutive slots is less than or equal to the remaining packet delay budget;
   a conversion value of the number of the consecutive slots is less than or equal to the remaining packet delay budget;
   the number of the consecutive slots is less than or equal to a conversion value of the remaining packet delay budget;
   a corresponding value of the number of the consecutive slots is less than or equal to the remaining packet delay budget; or
   the number of the consecutive slots is less than or equal to a difference between the remaining packet delay budget and a first set value, wherein the first set value is determined based on a subcarrier spacing configuration of a sidelink bandwidth part.

10. The method according to claim 6, wherein the physical sidelink transmission parameters further comprise a resource reservation interval, the resource reservation interval is converted into a value with a unit of logical slots, and the value with the unit of logical slots is marked as a conversion value; and
the conversion value meets at least one of the following:

the number of the consecutive slots is less than or equal to the conversion value;
the number of the consecutive slots is less than or equal to a sum of the conversion value and one compensation value;
the number of the consecutive slots is less than or equal to a product of $2^{\mu}$ and the conversion value; or
the number of the consecutive slots is less than or equal to a sum of the product of $2^{\mu}$ and the conversion value and one compensation value;
wherein $\mu$ is a non-negative integer, and $\mu$ is determined based on a subcarrier spacing configuration of a sidelink bandwidth part.

11. The method according to claim 2, wherein physical sidelink transmission parameters further comprise a remaining packet delay budget; and
any resource in the first resource set is not earlier than a sum of first time and second time, wherein the second time meets at least one of the following:

the second time is less than or equal to a difference between the remaining packet delay budget and a number of consecutive slots plus one; or
the second time is less than or equal to a difference between the remaining packet delay budget and a second set value plus one, wherein the second set value is obtained by converting the number of the consecutive slots with a unit of logical slots into a value with a unit of physical slots.

12. The method according to claim 2, wherein physical sidelink transmission parameters further comprise a remaining packet delay budget;

any resource in the first resource set is not earlier than a sum of first time and second time, and not later than a sum of the first time and third time; and
the third time meets at least one of the following:

a number of consecutive slots is less than or equal to a difference between the third time and the second time plus one;
the number of the consecutive slots is less than or equal to a difference between the third time and a third set value plus one, wherein the third set value is determined based on a subcarrier spacing configuration of a sidelink bandwidth part; or
the number of the consecutive slots is less than or equal to the third time.

13. The method according to claim 1, further comprising:

selecting at least one target resource from the third resource set or a subset of the third resource set; and
sending sidelink information or a physical sidelink channel via all or part of resources in the at least one target resource.

14. The method according to claim 1, wherein any time-frequency resource in the second resource set is a time-frequency resource with consecutive logical slots and consecutive physical slots.

15. A communication node, comprising: a memory, and one or more processors; wherein

the memory is configured to store one or more programs; and
the one or more programs, when executed by the one or more processors, cause the one or more processors to implement the resource determination method according to any one of claims 1 to 14.

16. A computer-readable storage medium, storing a computer program thereon, wherein the program, when executed by a processor, implements the resource determination method according to any one of claims 1 to 14.

Determine a second resource set, wherein any time-frequency resource in the second resource set is a time-frequency resource with consecutive logical slots ~110

Exclude at least one time-frequency resource in the second resource set, wherein remaining time-frequency resources in the second resource set after resource exclusion are a third resource set ~120

FIG. 1

In a slot n, a higher layer provides one or more PSSCH/PSCCH transmission parameters

Resource 1
Resource 2
Resource 3
Resource 4

Resource 8
Resource 7
Resource 6
Resource 5

f

Serial numbers of slots in one resource pool → x+1 x+2 x+3 x+4    y+1 y+2 y+3 y+4

t

Slot [n+T1, n+T2]

☐ Multi-slot candidate resource

▨ Slots belonging to one sidelink resource pool

FIG. 2

Serial numbers of slots
in a resource pool:    x    x+1   x+2   x+3     x+4   x+5     x+6   x+7

f

t

Slot:   11   12   13   14   15   16   17   18   19   20   21   22

$$\longleftarrow \text{Slot } [n+T1, \ n+T2] \longrightarrow$$

n+T1 = 11,   n+T2 = 22

☐ Multi-slot candidate resource

☐ Slots belonging to one sidelink resource pool

FIG. 3

Sensing window        Selecting window

Frequency-domain
resources
corresponding to
one resource pool

f

t

☐ PSCCH (containing PSCCH DMRS)

▨ PSSCH (containing PSSCH DMRS)

▦ Reserved time-frequency resource

☐ Non-reserved time-frequency resource

FIG. 4

310

320

Configuration information obtaining module

Sending module

FIG. 5

Memory 320

Input apparatus 340

Communi-cation apparatus 330

Processor 310

Output apparatus 350

FIG. 6

## INTERNATIONAL SEARCH REPORT

| International application No. |
|---|
| **PCT/CN2024/098828** |

| A. | CLASSIFICATION OF SUBJECT MATTER |
|---|---|

H04W72/25(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, VEN, EPTXT, USTXT, WOTXT, CNKI, 3GPP: 侧链, 候选, 资源池, 连续, 逻辑, 时隙, 物理, 排除, 选择, SL, sidelink, resource, pool, slot, logical, physical, continuous

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115943712 A (QUALCOMM INC.) 07 April 2023 (2023-04-07)<br>description, paragraphs [0039]-[0219] | 1-16 |
| X | WO 2023130282 A1 (GUANGDONG OPPO MOBILE TELECOMMUNICATIONS CORP., LTD.) 13 July 2023 (2023-07-13)<br>description, page 2, paragraph 6 to page 16, paragraph 1 | 1-16 |
| A | CN 114126052 A (CHINA MOBILE GROUP DESIGN INSTITUTE CO., LTD. et al.) 01 March 2022 (2022-03-01)<br>entire document | 1-16 |
| A | CN 116158179 A (HUAWEI TECHNOLOGIES CO., LTD.) 23 May 2023 (2023-05-23)<br>entire document | 1-16 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 August 2024** | **29 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2024/098828**

| Patent document cited in search report | | | Publication date (day/month/year) | Patent family member(s) | | | Publication date (day/month/year) |
|---|---|---|---|---|---|---|---|
| CN | 115943712 | A | 07 April 2023 | EP | 4209088 | A1 | 12 July 2023 |
| | | | | WO | 2022051026 | A1 | 10 March 2022 |
| | | | | US | 2022070921 | A1 | 03 March 2022 |
| | | | | US | 11611991 | B2 | 21 March 2023 |
| WO | 2023130282 | A1 | 13 July 2023 | CN | 118140449 | A | 04 June 2024 |
| CN | 114126052 | A | 01 March 2022 | | None | | |
| CN | 116158179 | A | 23 May 2023 | WO | 2022151401 | A1 | 21 July 2022 |

Form PCT/ISA/210 (patent family annex) (July 2022)

**REFERENCES CITED IN THE DESCRIPTION**

**Patent documents cited in the description**

- CN 202311289793